# EUROPÄISCHE PATENTANMELDUNG

(11) **EP 1 902 821 A1**
(43) Veröffentlichungstag der Anmeldung: **26.03.2008**
(21) Anmeldenummer: 07018282.9
(22) Anmeldetag: 18.09.2007
(51) Int. Cl.: B26F 1/40

(54) **Verfahren und Vorrichtung zum Zuschneiden von Wellpappe o. dgl. Verpackungsmitteln**

(30) Priorität: 22.09.2006 DE 102006045346
(71) Anmelder: Hermann Hötten Maschinenbau GmbH, 46286 Dorsten (DE)
(72) Erfinder: Springer, Dieter, 44805 Bochum (DE); Nelles, Wilhelm, 46359 Heiden (DE)
(74) Vertreter: Bünemann, Egon

(57) **Zusammenfassung**

Zum Zuschneiden von Verpackungsmitteln, insbesondere Wellpappe, ist eine Vorrichtung vorgesehen, die mit einer die Wellpappe in Form einer Endlosware aus einem Stapel bzw. von einer Rolle abnehmenden und eine Antriebswalze aufweisenden Fördereinheit zusammenwirkt. Dabei wird die Wellpappe getaktet in einen Arbeitsraum eingeführt. Hier wird mittels eines am Gestell der Vorrichtung gehaltenen und eine vertikale Schneidbewegung nutzenden Stanzwerkzeuges zumindest ein vorbestimmter Abschnitt der Wellpappe durch Messerteile abgetrennt und das zumindest eine einen Nutzen bildende Verpackungsmittel ausgestanzt. Dabei entstehende Abfallteile sind abführbar und das zugeschnittene Verpackungsmittel wird im Bereich einer Abtriebswelle aus dem Arbeitsraum ausgefördert. Die Vorrichtung ist erfindungsgemäß mit zumindest zwei wahlweise im Arbeitsraum positionierbaren Stanzwerkzeugen versehen.

## Beschreibung

Die Erfindung betrifft eine Vorrichtung zum Zuschneiden von Wellpappe gemäß dem Oberbegriff des Anspruchs 1 bzw. ein Verfahren gemäß Anspruch 13, womit die Wellpappe für eine nachfolgende Benutzung als Verpackungsmittel bereitgestellt wird.

Bekannte Vorrichtungen zum Zuschneiden von Verpackungsmitteln (Firma Hermann Hötten Maschinenbau GmbH, Dorsten; Prospekt Verpackungstechnologie, 9/2003) sind insbesondere für die Verarbeitung von Wellpappe in einem In-Line-System vorgesehen. Dabei wird von einem Stapel bzw. von einer Rolle abnehmbare Endlosware in die zum Zuschneiden vorgesehene Vorrichtung eingeführt und hier mittels einer Stanzbewegung im Bereich eines Stanzwerkzeuges eine vorgesehene Konturform des Verpackungsmittels erzeugt. Bei einer Änderung von kundenspezifisch variierenden Konturformen der Verpackungsmittel ist ein aufwendiger Wechsel des Stanzwerkzeuges erforderlich, wobei lange Stillstandszeiten die Produktivität gesamter Verpackungsanlagen, insbesondere bei In-Line-Verpackungskonzepten, nachteilig beeinflussen.

Die Erfindung befaßt sich mit dem Problem, ein Verfahren und eine Vorrichtung zum Zuschneiden von Wellpappe o. dgl. Verpackungsmitteln zu schaffen, die mit geringem technischen Aufwand eine Herstellung variabler Formen von Verpackungsmitteln mit höherer Produktivität ermöglichen.

Die Erfindung löst diese Aufgabe mit einer die Merkmale des Anspruchs 1 aufweisenden Vorrichtung bzw. einem Verfahren mit den Merkmalen des Anspruchs 13. Weitere vorteilhafte Ausgestaltungen ergeben sich aus den Ansprüchen 2 bis 12 bzw. 14 bis 16.

Das erfindungsgemäße Verfahren ist darauf gerichtet, für einen optimalen Zuschnitt auch unterschiedlicher Verpackungsmittel aus einer als Endlosware bereitgestellten Wellpappe im Bereich der an sich bekannten Stanzvorrichtung einen schnelleren Wechsel des Zuschnitts und/oder Werkzeugs zu ermöglichen. Bei einer Bearbeitung der Wellpappe auf einer weitgehend automatisierbaren Anlage ist ein Steuerungskonzept vorgesehen, mit dem ein schneller Wechsel der Stanzwerkzeuge möglich ist, diese wahlweise in den Arbeitsraum einführbar sind und damit der Fertigungsablauf variabler gestaltet werden kann.

Zusätzlich zu dem jeweils aktuellen Stanzwerkzeug ist zumindest ein weiteres Werkzeug im Nahbereich der Vorrichtung in einer Parkposition bzw. Nichtgebrauchsstellung vorhanden, so daß die kontinuierlich bzw. getaktet zugeführte Wellpappe produktiver bearbeitbar wird.

Das zumindest eine zusätzliche Werkzeug kann auch bei Auftreten von Verschleiß im Bereich des aktuell eingesetzten Stanzwerkzeuges sofort in Arbeitsstellung überführt werden, so daß bei hohen Fertigungsstückzahlen eine langwierige Unterbrechung des Fertigungsvorganges vermieden wird und dieser mit höherer Produktivität ausführbar ist.

Ebenso ist vorgesehen, die zumindest zwei Stanzwerkzeuge mit jeweils unterschiedliche Konturformen von Verpackungsmitteln erzeugenden Stanzmessern auszurüsten, so daß ein einfacher Werkzeugwechsel eine schnelle Umstellung des Fertigungsablaufs ermöglicht und so die Herstellung unterschiedlicher Verpackungsmittel auch mit der Zuführung einer unveränderten Charge der Endlos-Wellpappe erfolgen kann.

Zur jeweiligen mittels eines Steuerorgans vorgebbaren Verlagerung der Stanzwerkzeuge kann die für das Verfahren vorgesehene Vorrichtung unterschiedliche Werkzeugträger aufweisen, mit denen durch einfach steuerbare Schubbewegungen, Schwenkbewegungen und/oder eine Schwenk-Schub-Bewegung ein schneller Positionswechsel für die Stanzwerkzeuge möglich ist. In zweckmäßiger Ausführung ist der Werkzeugträger nach Art eines Revolverkopfes ausgeführt, an dem auch mehr als die zumindest zwei Stanzwerkzeuge festlegbar sind. Die jeweilige zentrale Schwenkachse dieses Revolverkopfes kann dabei quer zur Förderrichtung der zugeführten Wellpappe ausgerichtet sein oder in Längsrichtung der Zuführung der Wellpappe verlaufen, so daß sich jeweils unterschiedliche Vorrichtungskonzepte, variable Abmessungen der Stanzbaugruppe und kundenspezifische unterschiedliche Grenzen für die ausstanzbaren Größen von Verpackungsmitteln ergeben.

Weitere Einzelheiten und vorteilhafte Ausgestaltungen ergeben sich aus der nachfolgenden Beschreibung, in der das Verfahren und die Vorrichtung anhand mehrerer Ausführungsbeispiele näher erläutert sind. In den zugehörigen Zeichnungen zeigen:
- Fig. 1: eine Ansicht einer Verpackungsanlage gemäß dem Stand der Technik mit einer Vorrichtung zum Zuschneiden des Verpackungsmittels,
- Fig. 2: eine Vorderansicht einer Vorrichtung zum Zuschneiden von Verpackungsmitteln in einer ersten erfindungsgemäßen Ausführung,
- Fig. 3: eine Seitenansicht der Vorrichtung gemäß Fig. 2,
- Fig. 4: eine Draufsicht der Vorrichtung gemäß Fig. 2,
- Fig. 5 bis Fig. 7: jeweilige Vorderansichten der Vorrichtung ähnlich Fig. 2 mit mehreren Stanzwerkzeugen,
- Fig. 8: eine Seitenansicht einer zweiten Ausführung der Vorrichtung mit veränderter Lage der Stanzwerkzeuge,
- Fig. 9: eine Vorderansicht der Vorrichtung gemäß Fig. 8,
- Fig. 10 bis Fig. 12: jeweilige Seitenansichten ähnlich Fig. 8 mit veränderten Stanzwerkzeugen,
- Fig. 13: eine Seitenansicht der Vorrichtung ähnlich Fig. 1 mit einem Werkzeugmagazin,
- Fig. 14: eine Draufsicht der Vorrichtung gemäß Fig. 13,
- Fig. 15: eine Vorderansicht der Vorrichtung gemäß Fig. 13, und
- Fig. 16: eine Einzeldarstellung des Werkzeugmagazins gemäß Fig. 13.

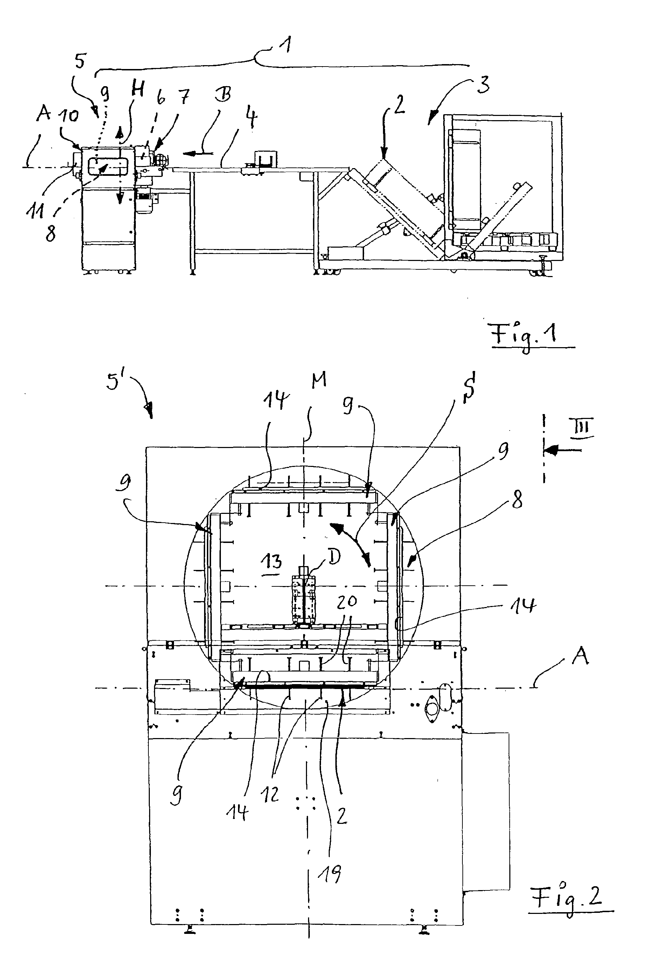

In Fig. 1 ist eine insgesamt mit 1 bezeichnete Verpackungsanlage dargestellt, die einen Wellpappe 2 o. dgl. Verpackungsmaterial in Form eines Stapels bzw. einer Rolle aufnehmende Vorratsbaugruppe 3 aufweist. Von dieser aus wird die Wellpappe 2 über einen als Ausrichttisch o. dgl. ausgebildeten Zuführteil 4 zu einer insgesamt mit 5 bezeichneten Vorrichtung zum Zuschneiden von Verpackungsmitteln gefördert. Im Bereich einer eine Antriebswalze 6 aufweisenden Fördereinheit 7 wird die Wellpappe 2 in einen Arbeitsraum 8 eingeführt und dabei in den Bereich eines oberhalb der Zuführebene A befindlichen Stanzwerkzeuges 9 (im Arbeitsraum 8, hier nicht dargestellt) verlagert.

Mittels dieses am Gestell 10 der Vorrichtung 5 gehaltenen und im Bereich von Messerteilen 14 bzw. Messern 12 eine vertikale Schneidbewegung H ermöglichenden Stanzwerkzeuges 9 wird ein vorbestimmter Abschnitt der Wellpappe 2 vom zugeführten Strang der Wellpappe 2 abgetrennt und dabei zumindest ein einen Nutzen bildendes Verpackungsmittel in der vorgesehenen Konturform ausgestanzt (nicht dargestellt). Die dabei entstehenden Abfallteile sind unterhalb der Zuführebene A abführbar und das zugeschnittene Verpackungsmittel wird im Bereich einer Abtriebswalze 11 aus dem Arbeitsraum 8 ausgefördert.

Bei dem erfindungsgemäßen Verfahren zum Zuschneiden von Verpackungsmitteln aus der Wellpappe 2 ist ein Konzept vorgesehen (Fig. 2), bei dem im Arbeitsraum 8 der Stanzvorrichtung 5' zumindest eines von mehreren Stanzwerkzeugen 9 automatisch wechselbar bereitgestellt wird und mit diesem das jeweils vorgesehene Verpackungsmittel durch einen an sich bekannten Stanz- bzw. Zuschnittvorgang erzeugt wird. Diese Verfahrensführung mit automatisch auswechselbaren Stanzwerkzeugen 9 schafft die Möglichkeit, den bisher vorgesehenen Umrüstvorgang beim Wechsel des Produkts einfacher zu gestalten und gleichzeitig die Flexibilität der Verpackungsanlage 1 insgesamt zu verbessern.

Mit der neuen Verfahrensführung kann vor oder während einer Zuführphase der Wellpappe 2 (Zuführung gemäß Pfeil B, Fig. 1) ein automatischer Wechsel des aktiven Stanzwerkzeuges 9 durchgeführt werden. Ebenso ist denkbar, daß während des automatischen Wechsels des jeweils aktiven Stanzwerkzeuges 9 die Charge der jeweiligen Wellpappe 2 im Bereich der Vorratsbaugruppe 3 gewechselt wird. Die Steuerung des Systems kann auch darauf abgestellt sein, daß mehrere gleichartige Stanzwerkzeuge 9 im Bereich der Vorrichtung 5' so angeordnet sind, daß in Abhängigkeit vom Verschleißzustand deren jeweiliger Messer 14 ein Wechsel des aktiven Werkzeuges 9 vorgesehen wird. Entsprechend dem Maschinenkonzept kann für diesen automatischen Wechselvorgang die Verlagerung durch eine Schubsteuerung, eine Schwenksteuerung oder eine Schwenk-Schub-Steuerung vorgesehen sein. Insbesondere ist ein Revolverkopf-Prinzip für die Umrüstung der Stanzwerkzeuge 9 vorgesehen.

In Fig. 2 ist eine erste erfindungsgemäße Ausführung der Vorrichtung 5' dargestellt, die vier wahlweise im Arbeitsraum 8 nach Art des Revolverkopfes positionierbare Stanzwerkzeuge 9 aufweist. Die Stanzwerkzeuge 9 sind dabei auf einem gemeinsamen Werkzeugträger 13 angeordnet, der gemeinsam mit den Stanzwerkzeugen 9 in eine Schwenkrichtung S verlagerbar ist. Damit ist eine kompakte Konstruktion erreicht, die einen Werkzeugwechsel auf kürzestem Weg und entsprechend schnell ermöglicht.

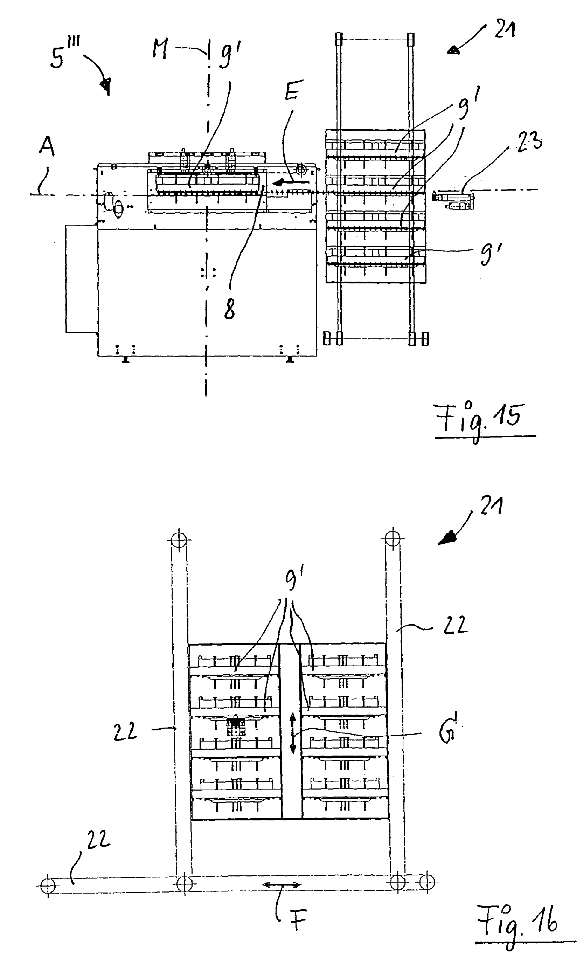

Das Konzept der Vorrichtung 5' sieht auch vor, daß die Stanzwerkzeuge 9 an einem jeweiligen einzelnen Werkzeugträger (nicht dargestellt) gehalten sein können und mit diesem aus einer Nichtgebrauchsstellung in eine jeweilige Arbeitsstellung im Bereich der Ebene A verlagert werden können. Diese Verlagerung der Baugruppen kann gleichzeitig oder nacheinander erfolgen, wobei entsprechend dem Maschinenkonzept weitgehend beliebige Steuerbewegungen mit linearen und/oder radialen Bewegungskomponenten anwendbar sind (Fig. 13 bis Fig. 16).

Die oberhalb der Zuführebene A gehaltenen Stanzwerkzeuge bzw. Werkzeugträger können im einfachsten Fall durch eine einfache horizontale Schubbewegung in die jeweilige Ausgangsstellung innerhalb der Vorrichtung 5' bzw. deren Arbeitsraum verlagert werden. Ebenso ist denkbar, daß die Stanzwerkzeuge 9 durch eine Schwenk-Schub-Bewegung in ihre jeweilige Ausgangsstellung für den nachfolgenden Stanzvorgang verbracht werden. In zweckmäßiger Ausführung ist vorgesehen, daß die am Werkzeugträger 13 gehaltenen Stanzwerkzeuge 9 durch eine Schwenk- bzw. Drehbewegung gemäß Pfeil S in den Bereich der Zuführebene A gelangen und damit ein Wechselsystem nach Art des Revolverkopfes optimale Bedienfunktionen ermöglicht.

Die im dargestellten System gemäß Fig. 2 bis 4 verwendeten Stanzwerkzeuge 9 können dabei jeweilige Messerteile 14 aufweisen, die aus der Wellpappe 2 jeweils Verpackungsmittel mit gleicher Kontur ausstanzen. Damit ist mit geringem Aufwand ein Wechsel des Stanzwerkzeuges 9 bei Verschleiß der Messerteile 14 möglich. Ebenso ist vorgesehen, daß die Messerteile 14 der jeweiligen Stanzwerkzeuge 9 unterschiedliche Konturformen der Verpackungsmittel erzeugen. In einer automatischen Verpackungsanlage 1 kann damit die Kontur des Verpackungsmittels schnell gewechselt werden, so daß beispielsweise über eine in Abförderrichtung B' hinter der Vorrichtung 5' befindliche Weiche o. dgl. Verteilorgan unterschiedliche Verpackungsplätze mit kurzzeitig wechselnde Konturen aufweisenden Verpackungsmitteln aus der Vorrichtung 5' versorgt werden können.

Aus der Zusammenschau von Fig. 2 bis 4 wird die Bearbeitung der Wellpappe in der erfindungsgemäßen Vorrichtung 5' deutlich. Die für den Transport der Wellpappe 2 auf der Einlaufseite vorgesehene Antriebswalze 6 ist im Bereich einer darüber angeordneten Andrückrolle 15 vorgesehen und auf der in Förderrichtung B' vorgesehenen Auslaufseite ist die Abtriebswalze 11 mit einer darüber befindlichen Andrückwalze 16 versehen. Die Abtriebswalze 11 ist dabei im Vergleich zur Antriebswalze 6 mit einer geringfügig höheren Drehzahl angetrieben. Damit wird erreicht, daß beim Stanzen der Wellpappe 2 eine Streckung erfolgt, der erzeugte Nutzen in Form des Verpackungsmittels aus der Vorrichtung 5' schneller ausförderbar ist und damit mit der nachgeschobenen Wellpappe 2 eine Kollision vermieden wird. Im Bereich des Arbeitsraumes 8 ist als Führungsteil zumindest eine schwenkbare Klappe 17 vorgesehen, die als unterstützende Gleitfläche für die Zuführung der Wellpappe 2 wirksam ist. Für die Förderung der Wellpappe 2 ist im Bereich vor der Antriebswalze 6 ein Drehgeber 18 vorgesehen, mit dem die Länge des jeweils vorgesehenen Abschnitts des Zuführmaterials vorgegeben wird.

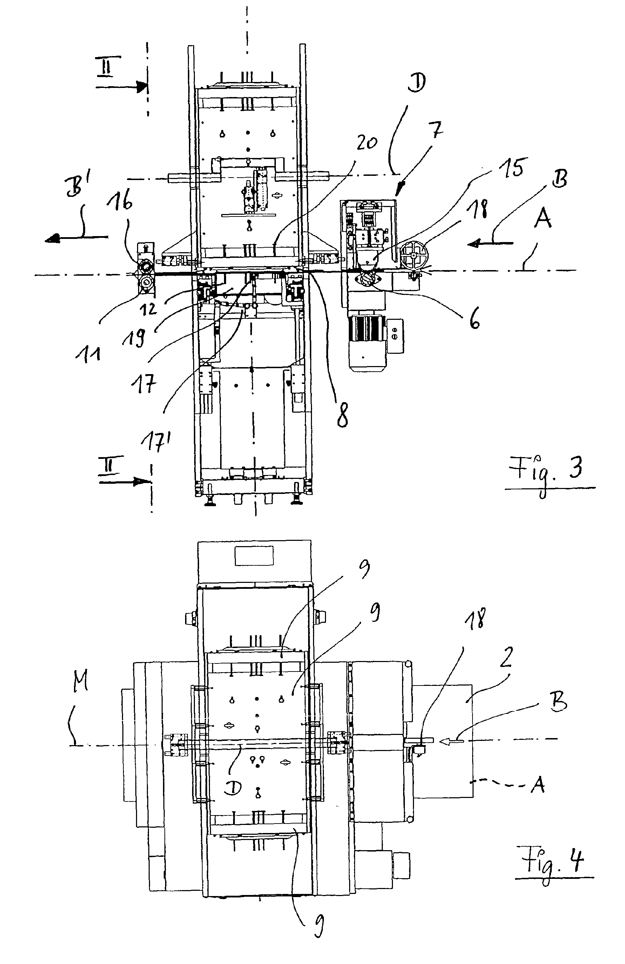

Beim automatischen Ablauf des Stanzvorganges wird die Wellpappe 2 mittels der durch den Drehgeber 18 gesteuerten Antriebs- und Abtriebswalzen 6, 11 in einer vorgegebenen Länge in die Vorrichtung 5' eingefördert. Dabei befinden sich die mit einer Steuerung 17' zusammenwirkenden Klappen 17 in der oberen Stellung (Fig. 3) und stützen die Wellpappe 2 ab. Nach Erreichen der für den Zuschnitt vorgesehenen Länge werden die Klappen 17 in die untere Position geschwenkt. Dadurch wird der Weg für eine Stanzwalze 19 frei, die in Abhängigkeit von ihrer jeweiligen Ruheposition in einer Schneidrichtung unter der Wellpappe 2 entlanggeführt bzw. -gerollt wird.

Die Wellpappe 2 wird dabei in die als Bandstahlmesser ausgebildeten Messer 12 des Stanzwerkzeuges 9 gedrückt, so daß ein an sich bekannter Schneidvorgang stattfindet. Die nunmehr zwischen den Bandstahlmessern 12 befindlichen Stanzreste werden mittels jeweiliger Auswurfteile, insbesondere in Form von Auswurfzylindern 20, aus dem Zwischenraum der Bandstahlmesser 12 herausgedrückt. Danach wird die Stanzwalze 19 in ihre jeweilige Wartestellung weiterbewegt und die Klappen 17 werden in die obere Position parallel zur Zuführebene A verlagert.

Danach wird der als fertiger Zuschnitt vorliegende Nutzen (bzw. das Verpackungsmittel) von der Abtriebswalze 11 aus der Vorrichtung 5' ausgefördert. Gleichzeitig kann mit der Antriebswalze 6 die Wellpappe 2 für den nächsten Zuschnitt nachgefördert werden. Es versteht sich, daß bei diesem Ablauf des Stanzverfahrens das Ende und der Anfang zweier nacheinander erfolgender Zuschnitte erzeugt werden.

Bei dem neuen Verfahren bzw. der neuen Vorrichtung 5' ist an Stelle der an sich bekannten einzigen Stanzplatte der als prismenförmiger Hohlkörper ausgebildete Werkzeugträger 13 vorgesehen, der in Abhängigkeit von den konstruktiven Möglichkeiten und Anforderungen auch mehr als zwei Stanzwerkzeuge 9 tragen kann. Um das jeweils für den herzustellenden Zuschnitt erforderliche Stanzwerkzeug 9 in die Arbeitsposition zur Ebene A hin zu verlagern, kann der Werkzeugträger 13 mitsamt den Stanzwerkzeugen 9 geschwenkt werden, wobei neben einem manuellen Antrieb insbesondere eine automatische Schwenksteuerung in Pfeilrichtung S vorgesehen ist. Nach Erreichen der jeweiligen Arbeitsposition wird das System insbesondere mittels einer Prismenzentrierung präzise fixiert. Damit wird mit geringem Aufwand erreicht, daß die Höheneinstellung der Stanzwalze 19 zu den jeweiligen Stanzwerkzeugen 9 ein konstantes Maß aufweist.

Bei dieser revolverkopfartigen Konstruktion können die Auswurfzylinder 20 oder ein entsprechender Sauggreifer (nicht dargestellt) entsprechend den bekannten einfachen Stanzplatten im Inneren des Werkzeugträgers 13 angeordnet sein. Zur Zuführung von Steuerenergien mittels eines Druckluft- bzw. Vakuumanschlusses sind jeweilige Drehdurchführungen vorgesehen (nicht dargestellt), die auf der Stirnseite bzw. auf einer Antriebswelle des Werkzeugträgers 13 angeordnet sein können. Als denkbare Alternative zu den Auswurfzylindern 20 werden für entsprechende Konturen der zuzuschneidenden Verpackungsmittel auch Platten mit Auswurfstangen (nicht dargestellt) vorgesehen, wobei diese ebenfalls im Inneren des Werkzeugträgers 13 positionierbar und durch eine einfache Hubbewegung aktivierbar sind.

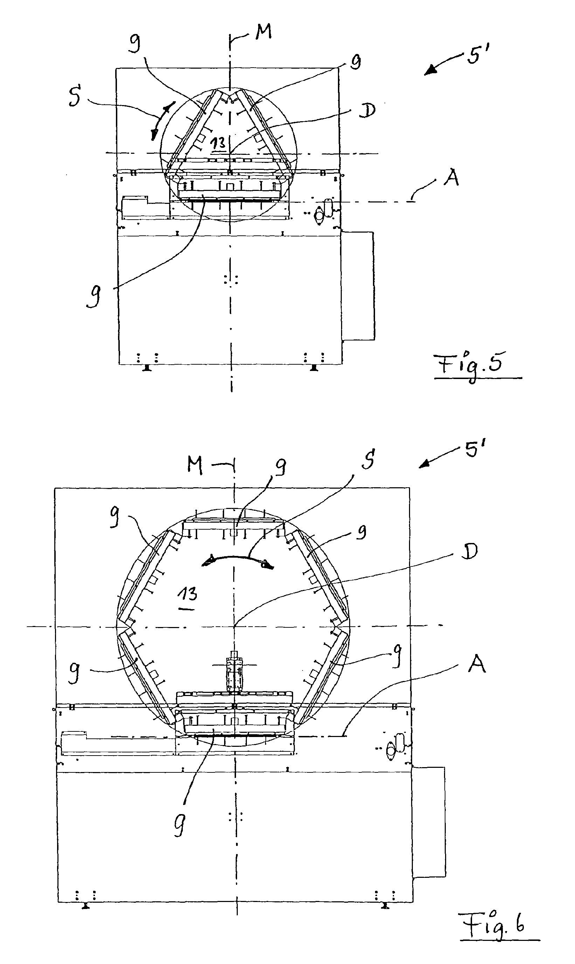

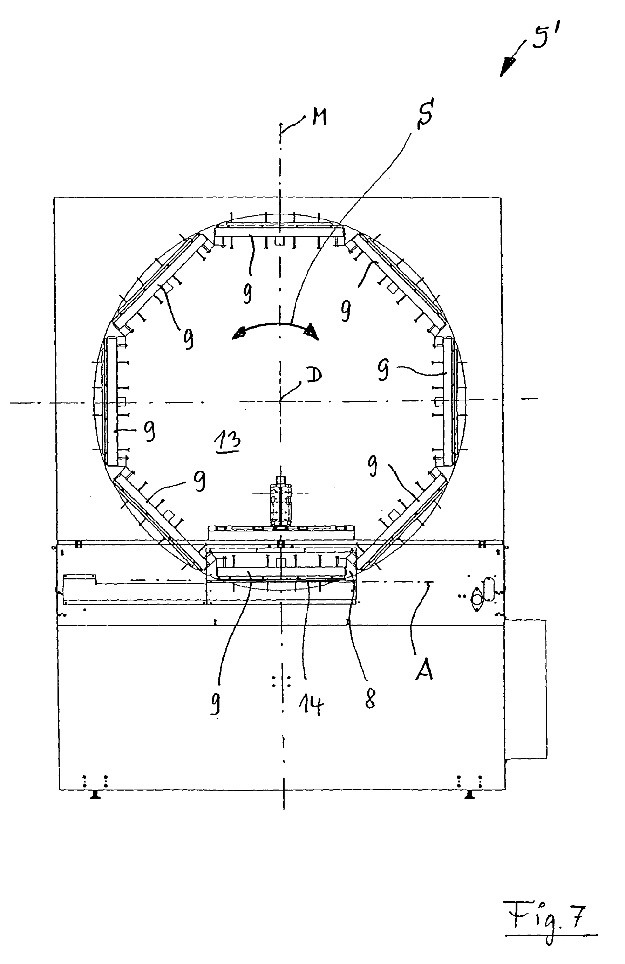

Das vorbeschriebene Funktionsprinzip der Vorrichtung 5' bleibt auch bei den nachfolgend näher beschriebenen Ausführungen der Vorrichtung 5', 5", 5'" erhalten. Bei den Ausführungen gemäß Fig. 2 bis 7 ist die Vorrichtung 5' im Bereich des revolverkopfartigen Werkzeugträgers 13 jeweils mit einer zentralen Schwenkachse D versehen, die in parallelem Abstand oberhalb der Zuführebene A in Richtung der Vorschubbewegung B bzw. B' in der Mittellängsebene M verläuft. In der Ausführung gemäß Fig. 5 weist die Vorrichtung 5' drei Stanzwerkzeuge 9 auf, in Fig. 6 ist eine Ausführung mit sechs Stanzwerkzeugen 9 dargestellt und eine entsprechende Erweiterung auf acht Stanzwerkzeuge 9 zeigt die Stirnansicht gemäß Fig. 7.

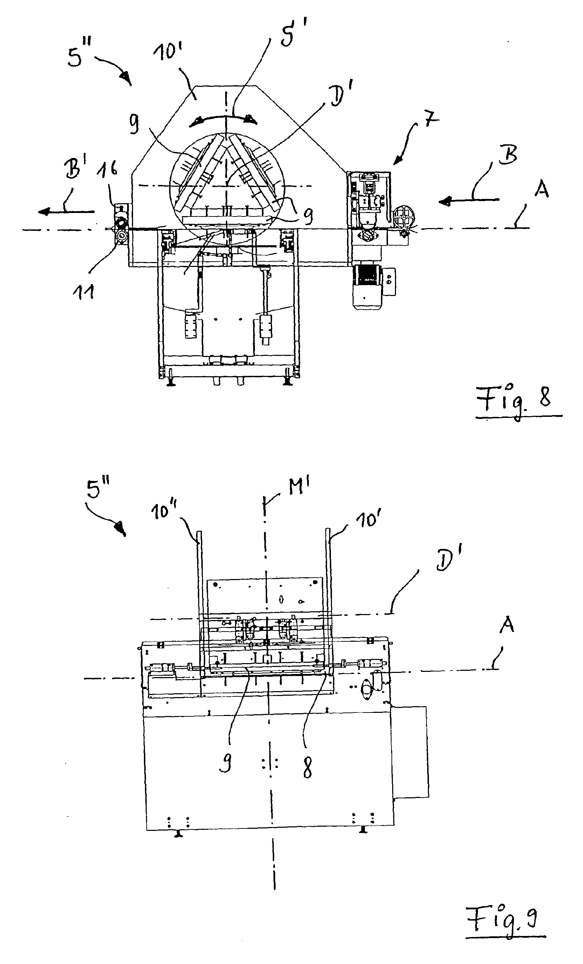

In Fig. 8 ist eine mit 5" bezeichnete zweite Ausführung der erfindungsgemäßen Vorrichtung dargestellt, wobei deren Stanzwerkzeuge 9 um eine Schwenkachse D' verlagerbar sind, die quer zur Förderrichtung B im Abstand zur Zuführebene A verläuft und dabei die Längsmittelebene M' schneidet. Die Stirnansicht gemäß Fig. 9 verdeutlicht diese konstruktive Gestaltung der Vorrichtung 5", wobei die revolverkopfartig angeordneten Stanzwerkzeuge 9 zwischen zwei sich in Vorschubrichtung B, B' erstreckenden Gestellteilen 10', 10" gehalten sind.

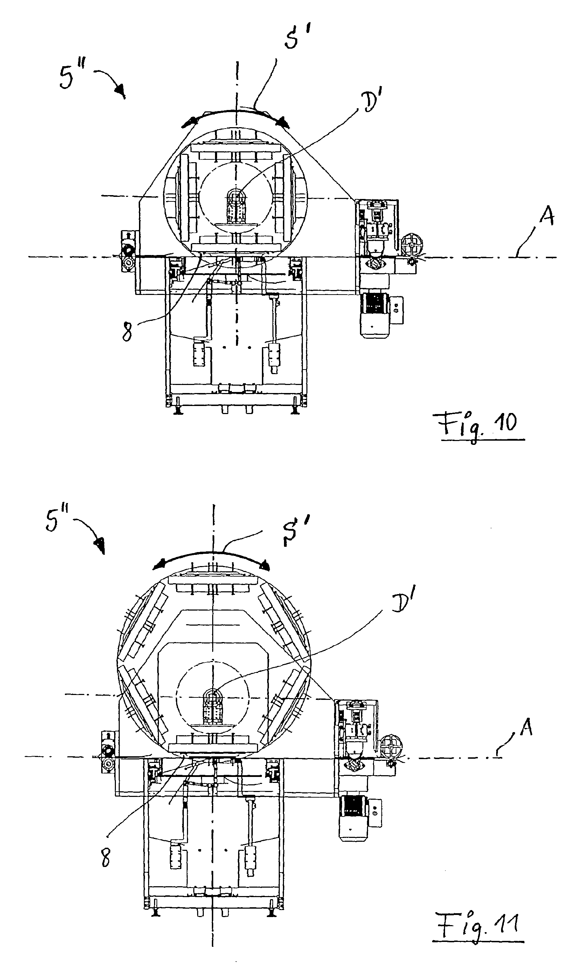

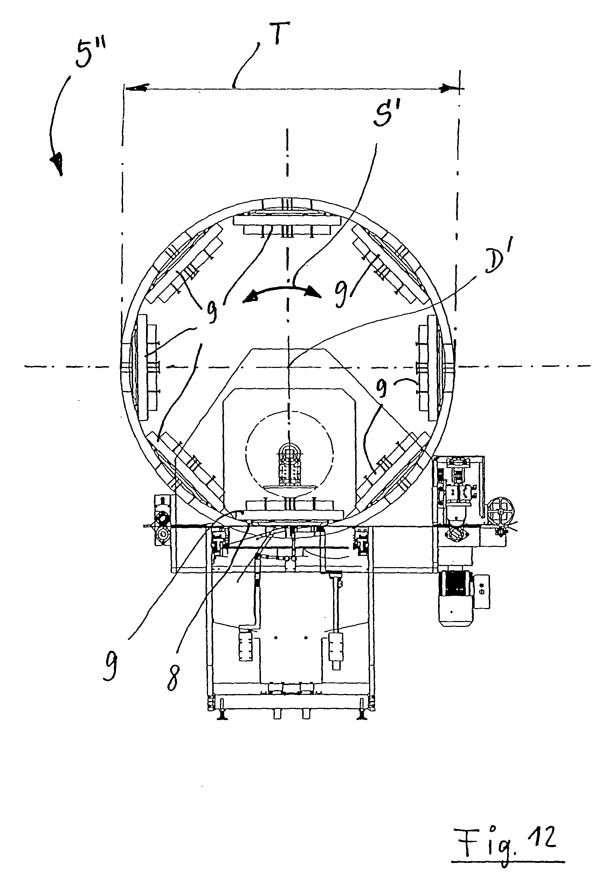

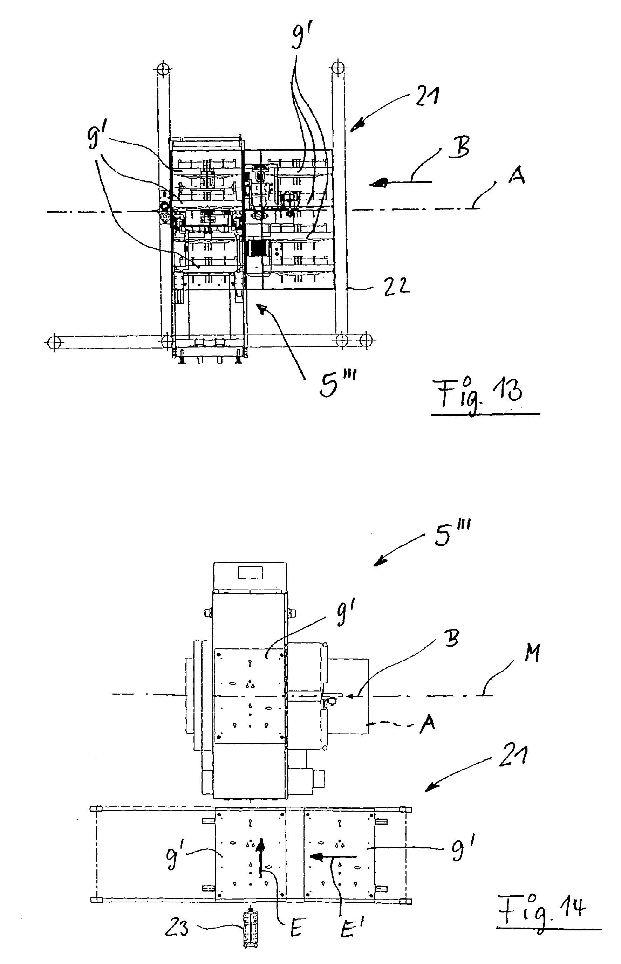

In Fig. 10 bis 12 sind weitere Ausführungen der Vorrichtung 5" dargestellt, wobei die jeweiligen Revolverköpfe mit vier (Fig. 10), sechs (Fig. 11) bzw. acht (Fig. 12) Stanzwerkzeugen 9 versehen sind. Es versteht sich, daß in konstruktiver Anpassung an diese Mehrzahl von Stanzwerkzeugen 9 (und die damit verbundene Vergrößerung des Bauteildurchmessers T) auch eine entsprechende Anordnung der Baugruppen im Bereich der Förderelemente 7, des Arbeitsraumes 8 und der Antriebsorgane erforderlich wird.

In Fig. 13 bis 16 ist eine Ausführung 5'" der erfindungsgemäßen Vorrichtung dargestellt, wobei diese gemäß der in Fig. 15 ersichtlichen Vorderansicht eine gegenüber dem in Fig. 1 dargestellten Stand der Technik nur geringfügig veränderte Bauteilanordnung aufweist. Wesentlich ist bei dieser Konstruktion, daß die Stanzwerkzeuge 9' in einem als Magazin 21 ausgebildeten Gestellteil 22 so positionierbar sind, daß durch eine horizontale Schubbewegung gemäß Pfeil E, E' (Fig. 14) ein linearer Werkzeugwechsel erreicht werden kann.

Die Seitenansicht gemäß Fig. 13 zeigt das Magazin 21 in Einbaulage neben der Vorrichtung 5"', wobei die Draufsicht gemäß Fig. 14 die Abstandsverhältnisse der beiden Baueinheiten 5"' und 21 verdeutlicht. Zur Verlagerung der im Magazin 21 befindlichen Stanzwerkzeuge 9 ist eine entsprechende Handhabungseinrichtung 23 (Fig. 15) vorgesehen, mittels der die Verlagerung in Pfeilrichtung E möglich ist. In Fig. 16 verdeutlichen jeweilige Bewegungspfeile F bzw. G die Steuerungsmöglichkeiten im Bereich des Magazins 21, so daß eine weitgehend unbegrenzte Vielzahl von Stanzwerkzeugen 9 für die Vorrichtung 5"' bereitstellbar ist und mit geringem Aufwand der erfindungsgemäße Wechselvorgang durchgeführt werden kann.

## Patentansprüche

1. Vorrichtung zum Zuschneiden von Verpackungsmitteln, insbesondere Wellpappe, mit einer die Wellpappe (2) in Form einer Endlosware aus einem Stapel bzw. von einer Rolle abnehmenden und eine Antriebswalze (6) aufweisenden Fördereinheit (7), mit der die Wellpappe (2) getaktet in einen Arbeitsraum (8) einführbar ist, wobei in diesem mittels eines am Gestell (10) der Vorrichtung (5) gehaltenen und eine vertikale Schneidbewegung (H) nutzenden Stanzwerkzeuges (9) zumindest ein vorbestimmter Abschnitt der Wellpappe (2) durch Messerteile (14) abtrennbar sowie das zumindest eine einen Nutzen bildende Verpackungsmittel ausstanzbar ist, derart, daß dabei entstehende Abfallteile abführbar sind und das zugeschnittene Verpackungsmittel im Bereich einer Abtriebswelle (11) aus dem Arbeitsraum (8) ausförderbar ist, **dadurch gekennzeichnet, daß** die Vorrichtung (5'; 5"; 5"') mit zumindest zwei wahlweise im Arbeitsraum (8) positionierbaren Stanzwerkzeugen (9, 9') versehen ist.

2. Vorrichtung nach Anspruch 1, **dadurch gekennzeichnet, daß** diese mit mehr als zwei Stanzwerkzeugen (9, 9') versehen ist.

3. Vorrichtung nach Anspruch 1 oder 2, **dadurch gekennzeichnet, daß** die an einem jeweiligen Werkzeugträger (13; 21) vorgesehenen Stanzwerkzeuge (9, 9') aus einer Nichtgebrauchsstellung in eine jeweilige Arbeitsstellung (Pfeil S, S', E) zum Zuschneiden und/oder Stanzen verlagerbar sind.

4. Vorrichtung nach Anspruch 1 oder 2, **dadurch gekennzeichnet, daß** die an einem gemeinsamen Werkzeugträger (13) befindlichen Stanzwerkzeuge (9) gleichzeitig oder nacheinander verlagerbar sind.

5. Vorrichtung nach einem der Ansprüche 1 bis 4, **dadurch gekennzeichnet, daß** die Stanzwerkzeuge (9, 9') mit Verpackungsmittel gleicher Kontur ausstanzenden Messerteilen (14) versehen sind.

6. Vorrichtung nach einem der Ansprüche 1 bis 4, **dadurch gekennzeichnet, daß** die jeweiligen Stanzwerkzeuge (9, 9') mit Verpackungsmittel unterschiedlicher Konturform erzeugenden Messerteilen (14) versehen sind.

7. Vorrichtung nach einem der Ansprüche 1 bis 6, **dadurch gekennzeichnet, daß** die Werkzeugträger (13) gemeinsam mit den Stanzwerkzeugen (9) verlagerbar sind.

8. Vorrichtung nach einem der Ansprüche 1 bis 7, **dadurch gekennzeichnet, daß** die am Werkzeugträger (13) gehaltenen Stanzwerkzeuge (9) durch eine Schwenk- oder Drehbewegung (S; S') in die Ausgangsstellung verlagerbar sind.

9. Vorrichtung nach einem der Ansprüche 1 bis 7, **dadurch gekennzeichnet, daß** die Stanzwerkzeuge (9') durch eine Schubbewegung (E) in ihre jeweilige Ausgangsstellung verlagerbar sind.

10. Vorrichtung nach Anspruch 9, **dadurch gekennzeichnet, daß** die Stanzwerkzeuge (9') aus einem Magazin (21) entnehmbar und in dieses rückführbar sind.

11. Vorrichtung nach einem der Ansprüche 1 bis 7, **dadurch gekennzeichnet, daß** die Stanzwerkzeuge (9, 9') durch eine Schwenk-Schub-Bewegung in ihre jeweilige Ausgangsstellung verlagerbar sind.

12. Vorrichtung nach einem der Ansprüche 1 bis 11, **dadurch gekennzeichnet, daß** die Antriebswalze (6) und die Abtriebswalze (11) mit unterschiedlicher Drehzahl antreibbar sind.

13. Verfahren zum Zuschneiden von Verpackungsmitteln, insbesondere von einer Endlosrolle o. dgl. abnehmbare Wellpappe (2), die in eine Stanzvorrichtung (5) verlagert wird und dabei jeweilige Verpackungsmittel erzeugt werden, **dadurch gekennzeichnet, daß** im Arbeitsraum (8) der Stanzvorrichtung (5'; 5"; 5"') zumindest eines von mehreren Stanzwerkzeugen (9, 9') automatisch auswechselbar bereitgestellt wird.

14. Verfahren nach Anspruch 13, **dadurch gekennzeichnet, daß** vor oder während einer Zuführphase (B) der Wellpappe (2) ein automatischer Wechsel (S, S', E) des Stanzwerkzeuges (9, 9') durchgeführt wird.

15. Verfahren nach Anspruch 13 oder 14, **dadurch gekennzeichnet, daß** vor oder während des automatischen Wechsels (S, S', E) des Stanzwerkzeuges (9, 9') die Charge der Wellpappe (2) gewechselt wird.

16. Verfahren nach einem der Ansprüche 13 bis 15, **dadurch gekennzeichnet, daß** die Stanzwerkzeuge (9, 9') in Abhängigkeit vom Verschleißzustand ihrer Messer (14) gewechselt werden.
